# EUROPEAN PATENT SPECIFICATION

(11) **EP 0 828 236 B1**
(45) Date of publication and mention of the grant of the patent: **13.08.2003**
(21) Application number: 97306739.0
(22) Date of filing: 02.09.1997
(51) Int. Cl.: G09B 11/00, G09B 17/00, G09B 23/02

(54) **Teaching aid for learning reading and writing skills**
Lernhilfe zum Erlernen des Lesens und Schreibens
Dispositif d'aide à l'apprentissage de la lecture et de l'écriture

(30) Priority: 05.09.1996 GB 9618521
(43) Date of publication of application: 11.03.1998
(73) Proprietor: Nerieux, Maureen Alma, London SE22 8TS (GB)
(72) Inventor: Nerieux, Maureen Alma, London SE22 8TS (GB)

(56) References cited:
- DE-A- 3 101 949
- GB-A- 2 282 910
- US-A- 4 299 577
- US-A- 4 443 199
- US-A- 5 306 153
- US-A- 5 429 513

## Description

This invention relates to teaching aids for children and more especially a teaching aid to assist a child in the acquisition of reading and writing skills see, for example, GB 2 282 910. The invention concerns a self instructing aid intended to teach children to build letter sounds into words and simultaneously learn to write them, using coloured-coded letters, such coloured letters are the subject of my earlier Patent no. GB 2282910.

This invention can be used to introduce and support the early stages during which a child learns to read and write words and maximises the perception of the aural/visual relationship of sounds and letters within words. The colour code enables the child to finger-trace the word and minimise errors implicit in writing activities.

Currently available teaching aids include:
1. Plastic cut-out letters in alphabetical sequence in a box.
   A series of picture cards, to stimulate the word building activity, is available but with no word-building facility, or board to highlight the spatial relationship of the letters to one another.
   The activity is not intended to be used as a writing activity.
2. Word building activities with base boards carrying several pictures and a space for spelling the word beside each picture. These are accompanied by separate plastic squares ,each bearing a letter of the alphabet to be used in peg-board style. The control of error is in the number and spacing of holes in the card, which matches the corresponding number and spacing of pegs on the back of the plastic square. The choice of words is in the objects familiar to children rather than any study of simple to complex activity for the acquisition of reading and writing skills.
3. Flash cards are intended for visual use only.
4. Word matching cards with pictures intended for visual use only.
5. Tracing/copying wipe-clean cards and books with words and pictures. These use dot to dot words and arrows to indicate writing directions. They progress from the simple to the complex very rapidly without taking into account the usually less rapid acquisition of skills by young children who need horizontal, rather than fast vertical development, of an activity and the fact that many children with weaker visual memories will have more need to acquire strategies for successful acquisition of literary skills.

In summary, the existing teaching aids described above are usually either insufficiently structured or proceed at a very fast pace or lack elements which maintain the child's focus or use only the visual or aural senses. They produce errors which are not easily controlled, requiring a large amount of input from an attendant adult or teacher.

According to the present invention there is provided an aid for teaching reading and writing skills, the aid comprising a first set of cards each showing one letter of the alphabet marked with different colours to indicate starting, intermediate and finishing points, a board on which each card of the set can be displayed, and a second set of cards each showing a word whose letters are each marked with different colours to indicate starting, intermediate and finishing points, the colours applied to the letters of the first set of cards being the same as those applied to the letters of the words of the second set of cards.

Preferably a receptacle is provided either in the form of a box containing a base board marked with a rainbow and colour-coded outlines of the alphabet in sequence, each letter having one or more templates of itself. A set of picture cards is provided with the word to be learnt printed underneath the picture. The board is provided with a device at the top to support the card in a semi-upright position. There is a horizontal line across the board, midway between the top and bottom edges so that the position of the letters ,in relationship one with the other, is spatially correct.

An advantage of the present invention is that in a preferred embodiment it allows the child to develop visual perception and an idea of the following:
- The sound-symbol relationship.
- The combination of symbols and sounds to form words.
- Strategies for forming and reading new words and unrecognised words.
- Acceptable habits in writing letters and combinations of letters into words.
- This activity dispenses with the use of a pen which slows down the process for very young children.
- Colour-coding of the letters adds interest to the activity but does not detract from it.

By 'colour coding' is meant a predetermined order of colours, by use of which letters can be formed. A preferred colour-coding is one based on the order of colours as they appear in the spectrum.

The invention will now be described by way of example with reference to one particular arrangement which comprises: a set of cards, each approximately 6 x 6cm in size, showing a picture described by a 3-letter phonic word printed underneath; a base board marked with a rainbow and colour-coded letters of the alphabet in sequence, each letter having one or more templates of itself; a board with a device at the top edge which supports the card in a semi-upright position and with a horizontal line on the board mid-way between the top and bottom edges.

The activity is multi-sensory. It simultaneously requires the use of visual ,aural and tactile senses which allows learning to be accelerated, as weaknesses in any one of the skills can be compensated for by others. Tracing the letters while combining the sounds enables the child to develop a motor memory for the whole word.

The adult sits at a table low enough to suit the child, with the box of letters on her non-dominant side. The child is invited to sit at the other side of the box with the board on the table in front of him. The adult places 3 cards on the table saying the word for each as she does so. The child is invited to choose one and place it in the support. The adult then points to each of the letters of the word on the card sounding them as she does so. The child is then invited to look in the box and find the letter for each sound and place it on the horizontal line. When the word is complete the adult makes sure that the letters are spatially correct on the line, then, points to each one in turn saying, "This makes us say...."(adult pronounces the phoneme). The adult then joins the sounds orally and repeats the whole word. The adult then finger-traces the word. Starting at the point of entry of the coloured bands the adult indicates the first colour, e.g. red, and then traces with her fingers along the letter to orange which indicates either a change in direction or that the letter is complete. Finally, the child is asked to replace, in the box, each letter sound in the correct sequence.

In writing more complex letters the adult must trace out the letter in uninterrupted contact with the template with the exception of t f I j k x. At the point of interruption the adult must say "Lift".

The adult sounds each letter before going on to the next one, until all the letters have been traced, after which the whole word is repeated.

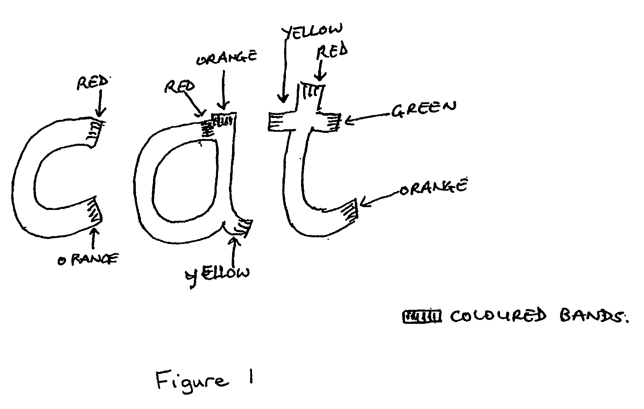

For example, with the word 'cat', as shown in figure 1:

For the 'c' the orange is identified as being the end point and the phonic of the letter is repeated.
For the 'a' at orange there is a change of direction and yellow is the end point before the phonic is repeated.
For the 't' the adult says, "Red....orange, lift, yellow.... green." Then repeats the phonic of this letter. The phonics are then run together and the word finally repeated.

Once the child has learnt the colour -code i.e. the order of colours to start, change direction and end; that each phonic is represented by a symbol; that letters stand on the line and 'tails' go below, he has the ability to proceed alone, thus developing basic reading and writing mechanical skills with a tight integral control of error and learning which proceeds at the child's own pace. This is an activity which, by the use of the colour-code and the tactile factor, is rendered so highly attractive to young children that they readily gain a considerable amount of exposure to it in the early years.

The following are alternative arrangements in accordance with the invention:
- Cards with colour-coded writing patterns.
- Colour-coded name and word cards with dots linking individual letters for practice in cursive script.
- Templates of more complex phonemes e.g. digraphs.
- Picture cards or boxes of objects with separate word cards.
- Picture cards of more complex phonic words containing blends.

## Claims

1. An aid for teaching reading and writing skills, the aid comprising a first set of cards each showing one letter of the alphabet marked with different colours to indicate starting, intermediate and finishing points **characterized in that** it further comprises, a board on which each card of the set can be displayed, and a second set of cards each showing a word whose letters are each marked with different colours to indicate starting, intermediate and finishing points, the colours applied to the letters of the first set of cards being the same as those applied to the letters of the words of the second set of cards.

2. An aid as claimed in claim 1 in which the cards of the second set include pictures.

3. An aid as claimed in claim 1 or claim 2 wherein the board includes means for supporting a card of the second set in a semi-upright position.

4. An aid as claimed in any one of claims 1 to 3 in which the board includes a horizontal line positioned midway between the upper and lower boundaries of the board.

5. An aid as claimed in any one of the preceding claims further comprising templates of letters of the alphabet.

## Patentansprüche

1. Hilfsmittel zum Lehren der Fertigkeit im Lesen und Schrelben, wobei das Hilfsmittel eine erste Gruppe von Karten aufwelst, die jeweils einen Buchstaben des Alphabetes zelgt, der mit unterschiedlichen Farben markiert ist, um eine Anfangsposition, eine Zwischenposition und eine Endposltlon anzugeben,
**dadurch gekennzeichnet, dass** außerdem eine Tafel vorgesehen Ist, auf der jede Karte der Gruppe dargestellt werden kann und dass eine zweite Gruppe von Karten vorgesehen ist, die jeweils ein Wort zeigt, dessen Buchstaben jeweils mit unterschiedlichen Farben markiert sind, um eine Anfangsposition, eine Zwischenposition und eine Endpositlon anzugeben, wobei die an den Buchstaben der ersten Gruppe von Karten angegebenen Farben die gleichen sind wie jene, die an den Buchstaben der Worte der zweiten Gruppe von Karten angebracht sind.

2. Hilfsmittel nach Anspruch 1, bei welchem die Karten der zweiten Gruppe Bilder aufweisen.

3. Hilfsmittel nach Anspruch 1 oder 2, bei welchem die Tafel Mittel aufweist, um eine Karte der zweiten Gruppe in einer halb aufrechten Lage zu halten.

4. Hilfsmittel nach einem der Ansprüche 1 bis 3, bei welchem die Tafel eine horizontale Linie aufweist, die in der Mitte zwischen der oberen und unteren Begrenzung der Tafel liegt.

5. Hilfsmittel nach einem der vorhergehenden Ansprüche, welches außerdem Schablonen der Buchstaben des Alphabetes aufweist.

## Revendications

1. Dispositif d'aide pour spécialistes enseignant la lecture et l'écriture, ce dispositif d'aide comprenant un premier jeu de cartes chacune montrant une lettre de l'alphabet, marquée de différentes couleurs pour indiquer les points de départ, intermédiaire et de fin, **caractérisé en ce qu'**il comprend en outre un panneau sur lequel chaque carte du jeu peut être disposée et un second jeu de cartes chacune montrant un mot dont les lettres sont chacune marquées de différentes couleurs pour indiquer les points de départ, intermédiaire et de fin, les couleurs appliquées aux lettres du premier jeu de cartes étant identiques à celles appliquées aux lettres des mots du second jeu de cartes.

2. Un dispositif d'aide selon la revendication 1 où les cartes du second jeu comprennent des images.

3. Un dispositif d'aide selon la revendication 1 ou la revendication 2 où le panneau comporte un moyen pour soutenir une carte du second jeu en une position semi-dressée.

4. Un dispositif d'aide selon l'une quelconque des revendications 1 à 3 où le panneau comporte une ligne horizontale positionnée à mi-chemin entre les limites supérieure et inférieure du panneau.

5. Dispositif d'aide selon l'une quelconque des revendications précédentes comprenant en outre un gabarit des lettres de l'alphabet.
